# FASCICULE DE BREVET EUROPEEN

(11) **EP 2 091 778 B1**
(45) Date de publication et mention de la délivrance du brevet: **17.04.2013**
(21) Numéro de dépôt: 07858749.0
(22) Date de dépôt: 28.11.2007
(51) Int. Cl.: B60N 2/48

(54) **APPUI-TETE POUR UN SIEGE DE VEHICULE AUTOMOBILE ET SIEGE DE VEHICULE AUTOMOBILE COMPORTANT UN TEL APPUI-TETE**
KOPFSTÜTZE FÜR AUTOSITZ UND MIT DIESER KOPFSTÜTZE AUSGESTATTETER AUTOSITZ
HEADREST FOR THE SEAT OF AN AUTOMOTIVE VEHICLE AND AUTOMOTIVE VEHICLE SEAT PROVIDED WITH SUCH HEADREST

(30) Priorité: 11.12.2006 FR 0610767
(43) Date de publication de la demande: 26.08.2009
(73) Titulaire: Renault S.A.S., 92100 Boulogne-Billancourt (FR)
(72) Inventeur: AUGADE, Philippe, 78460 Chevreuse (FR); LAMBERT, Benoit, 78420 Carrieres S/seine (FR); PINON, Olivier, 92120 Montrouge (FR)
(86) Numéro de dépôt international: PCT/FR2007/052411
(87) Numéro de publication internationale: WO 2008/071892

(56) Documents cités:
- DE-A1-102004 058 788
- DE-B3-102004 030 933
- FR-A1- 2 829 442
- GB-A- 2 168 247
- US-A1- 2002 158 499
- US-A1- 2005 121 963

## Description

La présente invention concerne un appui-tête pour un siège de véhicule automobile ainsi qu'un siège comportant un tel appui-tête.

Le document US 2006/0131947 A1 décrit un appui-tête pour un véhicule automobile qui comporte au moins une tige qui est apte à coopérer avec le dossier d'un siège de véhicule automobile pour la fixation de l'appui-tête, un élément de maintien, solidaire d'une extrémité de cette tige, qui comporte une partie centrale de maintien, apte à venir en contact avec l'arrière de la tête d'un utilisateur, et deux parties de calage, latérales à cette partie centrale de maintien, qui sont montées pivotantes au niveau de deux axes, parallèles à la tige et qui sont disposés dans le plan de l'élément de maintien. L'intérêt de cet appui-tête est que les parties de calage latérales, lorsqu'elles sont rapprochées de la partie de maintien, par pivotement, constituent des surfaces de repos sur lesquelles l'utilisateur peut appuyer le côté de sa tête pour se reposer. Par ailleurs, lorsque les parties de calmages sont rapprochées, elles constituent également un soutien latéral qui protège le cou de l'utilisateur en cas d'accident. Le document US 2005/0121963 A1 décrit un autre appui-tête, correspondant au préambule de la première revendication indépendante (1) de produit.

Le but de la présente invention est de proposer un appui-tête du type précité qui procure un confort et un soutien améliorés.

Ce but est atteint au moyen d'un appui-tête selon la revendication 1 apte à être monté coulissant sur un dossier de siège véhicule automobile et comportant un élément de maintien qui comporte une partie centrale de maintien comprenant une face de contact destinée à servir d'appui à l'arrière de la tête d'un utilisateur, et des première et deuxième parties de calage, montées à rotation de part et d'autre de ladite partie centrale de maintien autour, respectivement de premier et deuxième axes de rotation disposés sensiblement dans le plan de ladite face de contact, lesdits premier et second axes de rotation desdites parties de calage sont sensiblement sécants en un point qui est situé en dessous dudit élément de maintien, et qui correspond sensiblement au point d'articulation du cou d'un utilisateur dont l'arrière de la tête serait disposé contre ladite face de contact.

Cette position particulière du point d'intersection des axes de rotation permet d'assurer un bon maintien de la tête et du cou d'un utilisateur.

Selon l'invention, les parties de calage sont reliées chacune à la partie centrale de maintien au niveau d'un bord qui comporte un premier segment parallèle au premier ou au second axe de rotation et un second segment qui prolonge le premier segment et qui est sensiblement perpendiculaire à la transversale de la surface de contact. Cet agencement permet une articulation facile des parties de calage.

L'appui-tête comporte un élément en mousse qui recouvre la partie centrale de maintien et les parties de calage pour former une surface continue et assurer un soutien continu du cou d'un utilisateur.

La distance entre le bord inférieur de la partie centrale de maintien et le point d'intersection des premier et second axes de rotation est, avantageusement, comprise entre 40 et 70mm, ce qui permet d'obtenir la configuration précitée.

Les premier et second axes forment, par exemple, entre eux un angle compris entre 30° et 50°.

Avantageusement, l'appui-tête comporte un bourrelet repose nuque disposé au niveau de la partie basse de la partie centrale de maintien.

Ce bourrelet s'étend sur une hauteur comprise entre 60 et 80 mm à partir du bord inférieur de l'appui-tête.

Selon un mode de réalisation particulier, l'élément de maintien est monté à rotation autour d'un troisième axe de rotation transversal par rapport audit appui-tête et disposé sensiblement dans le plan de la face de contact. Ce mouvement de rotation supplémentaire permet d'adapter l'appui-tête de l'invention à un enfant et à des positions plus variées d'un utilisateur adulte, en particulier, à une position allongée de ce dernier.

L'appui tête peut comporter au moins une tige de montage, dont une première extrémité est liée à la partie basse de la partie centrale de maintien et une seconde extrémité est apte à coopérer avec le dossier d'un siège de véhicule automobile.

Lorsque l'élément de maintien est monté à rotation autour d'un troisième axe de rotation, l'élément de maintien est mobile entre une position droite, sensiblement parallèle à la tige et une position inclinée dans laquelle la partie basse de l'élément de maintien est la plus éloignée de la tige.

Selon un mode de réalisation particulier, la tige est montée coulissante dans l'appui-tête et l'appui-tête comporte des moyens de fixation et de réglage de la longueur de la tige.

La présente invention concerne également un siège de véhicule automobile comportant un dossier et une assise selon la seconde revendication indépendante (10) de produit. Selon l'invention, le bord libre du dossier qui n'est pas relié à l'assise comporte un appui-tête selon ladite première revendication indépendante (1) de produit.

Avantageusement, la distance de l'appui-tête par rapport au bord libre du dossier étant réglable, le dossier comporte une face avant destinée à venir au contact du dos d'un utilisateur et l'élément de maintien est monté pivotant autour d'un axe de rotation sensiblement transversal à l'appui-tête et disposé de manière à ce que l'appui-tête est apte à être amené dans une position dans laquelle l'élément de maintien recouvre une portion de la face avant du dossier. Cette position permet l'adaptation de l'appui-tête de l'invention à un enfant.

Selon un mode de réalisation particulier, la distance de l'appui-tête par rapport au bord libre du dossier étant réglable, le dossier comportant une face avant destinée à venir au contact du dos d'un utilisateur, l'appui-tête peut être amené dans une position dans laquelle il recouvre une portion de ladite face avant du dossier, ce qui permet son adaptation à un utilisateur de petite taille comme un enfant.

La présente invention, ses caractéristiques et les différents avantages qu'elle procure seront mieux compris à la lecture de la description qui suit de deux modes de réalisation, présentés à titre d'exemples non limitatifs, et qui fait références aux dessins annexés, sur lesquels :
- la figure 1 représente une vue en coupe longitudinale d'un premier mode de réalisation de l'invention ;
- la figure 2 représente une vue en perspective du premier mode de réalisation ;
- la figure 3 représente une vue en perspective d'un second mode de réalisation de l'invention ;
- la figure 4 représente une vue en perspective d'un siège équipé d'un appui-tête correspondant au premier mode de réalisation de l'invention, un utilisateur adulte étant assis sur le siège ; et
- la figure 5 représente une vue en perspective d'un siège équipé d'un appui-tête correspondant au premier mode de réalisation de l'invention, un utilisateur enfant étant assis sur le siège.

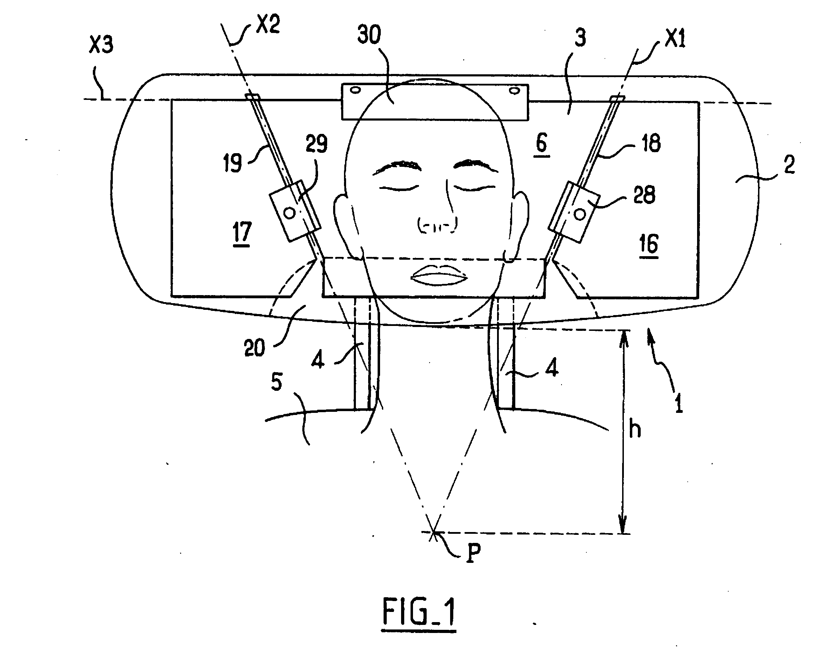

En référence à la figure 1, selon un premier mode de réalisation de l'invention, l'appui-tête comporte un élément de maintien 1 formé d'un coussin de mousse 2 qui recouvre une armature 3. L'élément de maintien 1 est soutenu par deux tiges 4, qui sont parallèles, et dont une première extrémité est solidaire de l'armature 3 tandis que la seconde extrémité est montée sur un dossier de véhicule automobile 5. L'armature 3 comporte une pièce centrale, qui constitue la partie centrale de maintien 6, et deux parties latérales, qui constituent les parties de calages 16 et 17. Les parties de calage 16 et 17 comportent un bord externe et un bord interne, 18 et 19, respectivement, par lequel elles sont reliées et articulées à la partie centrale de maintien 6. Ce bord interne est formé d'un premier segment de droite, qui s'étend du bord supérieur de l'armature 3, opposé aux tiges 4, jusqu'à une zone située à proximité du bord inférieur de l'armature 3, qui est solidaire des tiges 4, et d'un second segment de droite qui forme, dans le mode de réalisation particulier, ici représenté, un angle obtus, avec le premier segment de droite et relie ce dernier au bord inférieur de l'armature 3. Ce second segment peut également être sensiblement perpendiculaire à la transversale de l'appui-tête. Les deux premiers segments de droite des bords interne 18 et 19 forment un angle aigu de 44°, dans le cas présent. Les deux axes X1 et X2 qui passent par les deux premiers segments de droite des bords internes 18 et 19 sont sécants en un point P, situé au delà de la partie de maintien 6 de l'appui-tête, dans la direction des tiges 4 et du dossier 5, et qui correspond au point d'articulation du cou d'un utilisateur dont la silhouette est représentée sur la figure 1. La hauteur h qui sépare le point le plus bas du coussin 2 du point P précité est comprise entre 40 et 70mm et, par exemple, de l'ordre de 60mm dans le cas présent.

Sur la figure 1, les deux parties de calage 16 et 17 forment une surface sensiblement plane avec la partie centrale de maintien 6. Le bord de l'armature de la partie de maintien 6 comporte de chaque côté, un premier segment de droite qui est parallèle et disposé en regard du premier segment de droite de chacun des bords internes 18 et 19 des parties latérales 16 et 17, et un segment de droite parallèle aux tiges 4 (i.e. sensiblement perpendiculaire à la transversale de l'appui-tête), qui relie le premier segment au bord inférieur de la partie de maintien 6. Il existe ainsi un espace sans armature, situé entre le second segment du bord de l'armature de la partie de maintien 6 et le second segment du bord interne de chacune des parties de calage latérales 16 et 17. Ce vide permet d'articuler les deux parties de calage 16 et 17 sans que la mousse du coussin 2 ne soit une gêne. L'appui-tête comporte, de plus, au niveau de la zone située entre les seconds segments des bords de la partie de maintien 6, un bourrelet ou une surépaisseur de mousse 20 qui fait office de zone cale nuque et qui s'étend jusque sur les parties de calage de manière à combler les vides existant entre les armatures de la partie centrale de maintien 6 et celle des parties de calage 16 et 17. Ce bourrelet 20 dépasse en dessous de l'armature de l'appui-tête, vers les tiges 4, et s'étend sur une hauteur de l'ordre de 75mm, dans le cas présent. Les deux parties de calage 16 et 17 sont articulées au moyen d'articulations 28 et 29, disposées sur les premiers segments de droite des bords internes 18 et 19 des parties de calage 16 et 17. Ces articulations 28 et 29 permettent de faire pivoter les parties de calages 16 et 17 autour des axes X1 et X2 précités. Les parties de calage 16 et 17 peuvent ainsi pivoter vers la tête de l'utilisateur. Dans le mode de réalisation ici représenté, ces articulations permettent de mettre en position les deux parties de calage 16 et 17, à la main, par déplacement directe de ces deux parties. Ces dernières restent en place du fait des frottements existants dans l'articulation.

Une articulation d'un autre type peut également être utilisée sans sortir du cadre de la présente invention. Une articulation 30, du même type que précité, est également disposée sur le bord supérieur de la partie centrale de l'armature 3, de manière à permettre l'articulation de la partie centrale de maintien 6 par rapport à l'axe X3, qui est parallèle aux bords supérieur et inférieur de la partie de maintien 6 et sensiblement perpendiculaire aux tiges 4.

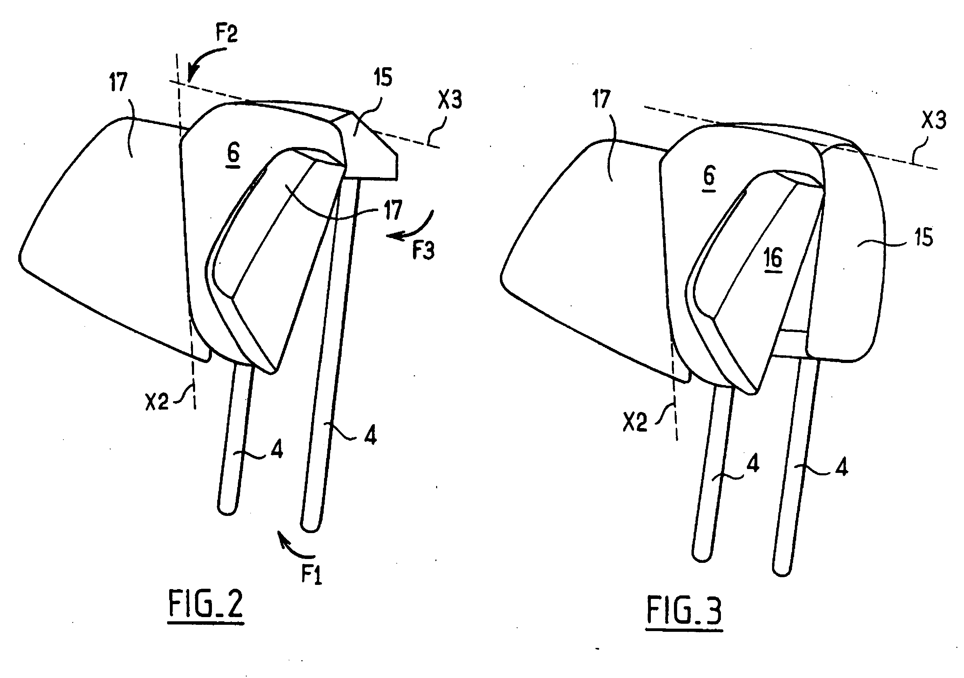

Comme représenté sur la figure 2, les deux parties de calage 16 et 17 peuvent être rapprochées de la face de contact, c'est-à-dire la face qui vient en contact avec l'arrière de la tête d'un utilisateur, de la partie centrale de maintien 6, selon un mouvement de rotation, représenté par les flèches F1 et F2, autour des deux axes X1 et X2 précités. Dans ce premier mode de réalisation, la partie de maintien 6 peut également pivoter vers l'avant, c'est-à-dire dans la direction de la face de contact, selon un mouvement représenté par la flèche F3, autour de l'axe X3. Dans ce mode de réalisation, l'appui-tête comporte une partie de support 15, solidaire de l'extrémité des tiges 4, qui est opposée à l'extrémité des tiges 4 apte à coopérer avec le dossier d'un siège automobile. Cette partie de support 15 comporte un bord longitudinal qui supporte l'articulation 30 qui permet le pivotement de la partie de maintien 6 autour de l'axe X3. Dans la configuration représentée sur la figure 2, la partie de maintien 6 et les parties de calages 16 et 17 sont pivotées vers la face de contact, c'est-à-dire qu'elles sont éloignées des tiges 4, la zone cale nuque étant la plus éloignée des tiges 4 tandis que la portion haute de la partie de maintien 6 reste liée à la partie de support 15 au niveau de l'articulation 30. Ce premier mode de réalisation peut avantageusement être utilisé pour équiper un siège arrière de véhicule automobile.

La figure 3 représente un second mode de réalisation de l'invention dont les parties et éléments en commun avec le premier mode de réalisation sont référencés à l'identique. Ce second mode de réalisation peut être utilisé pour équiper un siège avant de véhicule automobile. Dans ce second mode de réalisation, la partie de support 15 s'étend également selon un plan parallèle aux tiges 4 et comporte des moyens de réglage de la longueur des tiges 4 dépassant (non représentés). Ces moyens de réglage permettent de régler la hauteur de l'appui-tête par rapport au dossier du siège, en faisant coulisser les tiges 4 dans l'élément de support 15. Sur la figure 2, les parties de calages 16 et 17 sont dans leur position pivotée et la partie de maintien 6 est dans sa position inclinée.

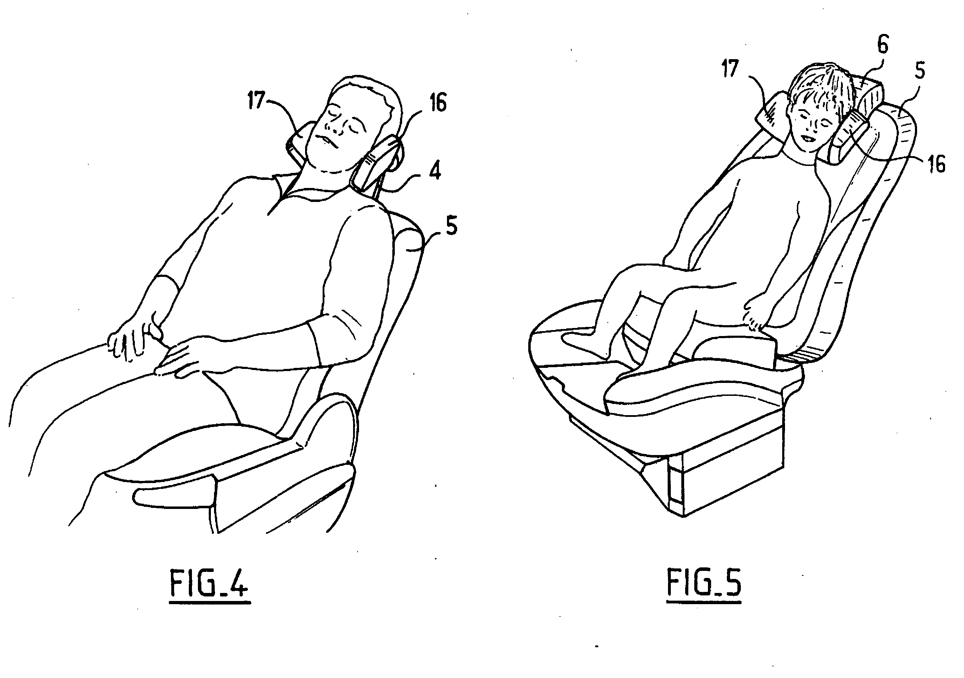

Sur la figure 4, la longueur des tiges 4, visible entre le dossier 5 et la partie de maintien 6, peut être réglée grâce à des moyens de réglage qui sont intégrés au dossier 5 du siège. Il est ainsi possible de régler la hauteur de l'appui tête pour que le point P (voir figure 1) vienne se positionner dans une zone correspondant sensiblement au point d'articulation du cou d'un utilisateur adulte. Les variations individuelles de la position de cette articulation sont suffisamment faibles pour qu'il soit possible de déterminer une position moyenne valable pour tout individu adulte. La position pivotée des parties de calage 16 et 17 assure un calage latéral, agréable et sûr. L'articulation selon l'axe X3 pellet d'augmenter le confort de l'utilisateur en position repos. Dans cette position, lorsque l'élément de maintien est basculé vers l'utilisateur, il permet de caler confortablement la nuque de ce dernier, dans une position légèrement inclinée vers l'arrière du siège offrant ainsi une position de repos confortable, lorsque le dossier 5 du siège est incliné vers l'arrière.

Comme représenté sur la figure 5, le pivotement de l'élément de maintien et le réglage de la hauteur de l'appui-tête par rapport au dossier du siège 5, permettent d'amener la partie de maintien 6 sur le dossier 5. La partie centrale de maintien 6 vient donc se superposer sur une portion du dossier 5 ce qui permet à un utilisateur enfant d'utiliser l'appui-tête de l'invention. La partie de support 15 est conformée et disposée de manière à permettre la superposition de la partie de maintien 6 sur le dossier 5. Dans ce cas, la position pivotée des parties de calage 16 et 17 permet d'assurer un maintien latéral accru de la tête de l'enfant en cas de choc. Par ailleurs le pivotement de la partie de maintien 6 autour de l'axe X3 permet, également, d'adapter parfaitement la position de la partie de maintien 6 à la morphologie de l'enfant.

## Revendications

1. Appui-tête apte à être monté sur un dossier (5) de siège véhicule automobile, ledit appui-tête comportant un élément de maintien (1) qui comporte une partie centrale de maintien (6) comprenant une face de contact destinée à servir d'appui à l'arrière de la tête d'un utilisateur, et des première et deuxième parties de calage (16 ; 17), montées à rotation de part et d'autre de ladite partie centrale de maintien (6) autour, respectivement de premier et deuxième axes de rotation (X1 ; X2) disposés sensiblement dans le plan de ladite face de contact, lesdits premier et second axes de rotation (X1 ; X2) desdites parties de calage (16 ; 17), étant sensiblement sécants en un point (P) qui est situé en dessous dudit élément de maintien (1), et qui correspond sensiblement au point d'articulation du cou d'un utilisateur dont l'arrière de la tête serait disposé contre ladite face de contact, **caractérisé en ce qu'**il comporte un élément en mousse (2) qui recouvre ladite partie centrale de maintien (6) et lesdites parties de calage (16 ;17) pour former une surface continue et assurer un soutien continu du cou d'un utilisateur, et **en ce que** lesdites parties de calage (16 ; 17) sont reliées chacune à ladite partie centrale de maintien (6) au niveau d'un bord qui comporte un premier segment parallèle audit premier ou audit second axe de rotation (X1 ; X2) et un second segment qui prolonge ledit premier segment et qui est sensiblement perpendiculaire à la transversale de ladite surface de contact, créant ainsi un espace sans armature situé entre le second segment du bord de l'armature de ladite partie de maintien (6) et le second segment du bord interne de chacune desdites parties de calage (16; 17), ce vide permettant d'articuler les dites parties du calage sans que la mousse dudit élément (2) ne soit une gêne.

2. Appui-tête selon la revendication 1, **caractérisé en ce que** la distance entre le bord inférieur de ladite partie centrale de maintien (6) et le point d'intersection (P) desdits premier et second axes de rotation (X1 ; X2) est comprise entre 40 et 70mm.

3. Appui-tête selon la revendication 1 ou 2, **caractérisé en ce que** lesdits premier et second axes (X1 ; X2) forment entre eux un angle compris entre 30° et 50°.

4. Appui-tête selon l'une quelconque des revendications précédentes, **caractérisé en ce qu'**il comporte un bourrelet repose nuque (20) disposé au niveau de la partie basse de ladite partie centrale de maintien (6) et desdites parties de calages (16 ; 17).

5. Appui-tête selon la revendication 4, **caractérisé en ce que** ledit bourrelet (20) s'étend sur une hauteur comprise entre 60 et 80 mm à partir du bord inférieur dudit appui-tête.

6. Appui-tête selon l'une quelconque des revendications précédentes, **caractérisé en ce que** ledit élément de maintien (1) est monté à rotation autour d'un troisième axe de rotation (X3) transversal par rapport audit appui-tête et disposé sensiblement dans le plan de ladite face de contact.

7. Appui-tête selon l'une quelconque des revendications précédentes, **caractérisé en ce qu'**il comporte au moins une tige de montage (4), dont une première extrémité est liée à la partie basse de ladite partie centrale de maintien (6) et une seconde extrémité est apte à coopérer avec le dossier (5) d'un siège de véhicule automobile.

8. Appui tête selon les revendications 6 et 7, **caractérisé en ce que** lorsque ledit élément de maintien (1) est monté à rotation autour dudit troisième axe de rotation (X3), ledit élément de maintien (1) est mobile entre une position droite, sensiblement parallèle à ladite tige (4) et une position inclinée dans laquelle la partie basse de l'élément de maintien (1) est la plus éloignée de ladite tige (4).

9. Appui-tête selon la revendication 8, **caractérisé en ce que** ladite tige (4) est montée coulissante dans ledit appui-tête et **en ce qu'**il comporte des moyens de fixation et de réglage de la longueur de ladite tige (4).

10. Siège de véhicule automobile (5) comportant un dossier et une assise, **caractérisé en ce que** le bord libre dudit dossier qui n'est pas relié à ladite assise comporte un appui-tête selon l'une quelconque des revendications 1 à 9.

11. Siège de véhicule selon la revendication 10, **caractérisé en ce que** la distance de l'appui-tête par rapport audit bord libre dudit dossier étant réglable, **en ce que** ledit dossier comporte une face avant destinée à venir au contact du dos d'un utilisateur et **en ce que** ledit élément de maintien (1) est monté pivotant autour d'un axe de rotation (X3), sensiblement transversal audit appui-tête et disposé de manière à ce que ledit appui-tête est apte à être amené dans une position dans laquelle ledit élément de maintien (1) recouvre une portion de ladite face avant dudit dossier.

## Claims

1. Headrest capable of being mounted on a motor vehicle seat back (5), said headrest comprising a holding element (1) which comprises a central holding portion (6) comprising a contact face designed to be used as a resting surface at the back of the head of a user, and first and second supporting portions (16; 17), mounted so as to rotate on either side of said central holding portion (6) about, respectively first and second axes of rotation (X1; X2) placed substantially in the plane of said contact face, said first and second axes of rotation (X1; X2) of said supporting portions (16; 17) substantially intersecting at a point (P) which is situated beneath said holding element (1), and which corresponds substantially to the point of articulation of the neck of a user of whom the back of the head is placed against said contact face, **characterized in that** it comprises a foam element (2) which covers said central holding portion (6) and said supporting portions (16; 17) in order to form a continuous surface and provide a continuous support to the neck of a user and **in that** said supporting portions (16; 17) are each connected to said central holding portion (6) at an edge which comprises a first segment parallel to said first or to said second axis of rotation (X1; X2) and a second segment which extends said first segment and which is substantially perpendicular to the transversal of said contact surface, thus creating a space without framework situated between the second segment of the edge of the framework of said holding portion (6) and the second segment of the inner edge of each of said supporting portions (16; 17), this empty space making it possible to articulate said supporting portions without the foam of said element (2) being a hindrance.

2. Headrest according to Claim 1, **characterized in that** the distance between the bottom edge of said central holding portion (6) and the point of intersection (P) of said first and second axes of rotation (X1; X2) is between 40 and 70 mm.

3. Headrest according to Claim 1 or 2, **characterized in that** said first and second axes (X1; X2) form between them an angle of between 30° and 50°.

4. Headrest according to any one of the preceding claims, **characterized in that** it comprises a nape-rest cushion (20) placed on the bottom portion of said central holding portion (6) and of said supporting portions (16; 17).

5. Headrest according to Claim 4, **characterized in that** said cushion (20) extends over a height of between 60 and 80 mm from the bottom edge of said headrest.

6. Headrest according to any one of the preceding claims, **characterized in that** said holding element (1) is mounted so as to rotate about a third axis of rotation (X3) that is transversal relative to said headrest and placed substantially in the plane of said contact face.

7. Headrest according to any one of the preceding claims, **characterized in that** it comprises at least one mounting rod (4), of which a first end is connected to the bottom portion of said central holding portion (6) and a second end is capable of interacting with the back (5) of a motor vehicle seat.

8. Headrest according to Claims 6 and 7, **characterized in that** when said holding element (1) is mounted so as to rotate about said third axis of rotation (X3), said holding element (1) can be moved between an upright position, substantially parallel to said rod (4), and an inclined position in which the bottom portion of the holding element (1) is furthest away from said rod (4).

9. Headrest according to Claim 8, **characterized in that** said rod (4) is mounted so as to slide in said headrest and **in that** it comprises means for attachment and for adjusting the length of said rod (4).

10. Motor vehicle seat (5) comprising a back and a squab, **characterized in that** the free edge of said back which is not connected to said squab comprises a headrest according to one of Claims 1 to 9.

11. Vehicle seat according to Claim 10, **characterized in that** the distance of the headrest relative to said free edge of said back being adjustable, **in that** said back comprises a front face designed to come into contact with the back of a user and **in that** said holding element (1) is mounted so as to pivot about an axis of rotation (X3), substantially transversal to said headrest and placed so that said headrest is capable of being brought into a position in which said holding element (1) covers a portion of said front face of said back.

## Patentansprüche

1. Kopfstütze, die an einer Rückenlehne (5) eines Kraftfahrzeugsitzes befestigt werden kann, wobei die Kopfstütze ein Halteelement (1) umfasst, das einen zentralen Halteteil (6), der eine Kontaktfläche umfasst, die als Stütze für den Hinterkopf eines Benutzers dienen soll, und einen ersten und einen zweiten Anlageteil (16; 17) umfasst, die auf beiden Seiten des zentralen Halteteils (6) um eine erste bzw. zweite Drehachse (X1; X2), die im Wesentlichen in der Ebene der Kontaktfläche angeordnet sind, drehbar befestigt sind, wobei sich die erste und zweite Drehachse (X1; X2) der Anlageteile (16; 17) in einem Punkt (P) im Wesentlichen schneiden, der sich unter dem Halteelement (1) befindet und im Wesentlichen dem Gelenkpunkt des Halses eines Benutzers entspricht, dessen Hinterkopf auf der Kontaktfläche aufliegen würde, **dadurch gekennzeichnet, dass** sie ein Schaumstoffelement (2) umfasst, das den zentralen Halteteil (6) und die Anlageteile (16; 17) bedeckt, um eine durchgehende Fläche zu bilden und eine durchgängige Abstützung des Halses eines Benutzers zu gewährleisten, und dass die Anlageteile (16; 17) jeweils mit dem zentralen Halteteil (6) an einem Rand verbunden sind, der ein zur ersten oder zur zweiten Drehachse (X1; X2) paralleles erstes Segment und ein zweites Segment, das das erste Segment verlängert und im Wesentlichen senkrecht zur Transversalen der Kontaktfläche ist, umfasst, wodurch ein Raum ohne Gestell zwischen dem zweiten Segment des Rands des Gestells des Halteteils (6) und dem zweiten Segment des Innenrands jedes der Anlageteile (16; 17) entsteht, wobei dieser Hohlraum ein Anlenken der Anlageteile ohne Behinderung durch den Schaumstoff des Elements (2) ermöglicht.

2. Kopfstütze nach Anspruch 1, **dadurch gekennzeichnet, dass** der Abstand zwischen dem unteren Rand des zentralen Halteteils (6) und dem Schnittpunkt (P) der ersten und zweiten Drehachse (X1; X2) zwischen 40 und 70 mm beträgt.

3. Kopfstütze nach Anspruch 1 oder 2, **dadurch gekennzeichnet, dass** die erste und die zweite Achse (X1; X2) zwischen sich einen Winkel zwischen 30° und 50° bilden.

4. Kopfstütze nach einem der vorhergehenden Ansprüche, **dadurch gekennzeichnet, dass** sie ein Nackenstützkissen (20) umfasst, das am unteren Teil des zentralen Halteteils (6) und der Anlageteile (16; 17) angeordnet ist.

5. Kopfstütze nach Anspruch 4, **dadurch gekennzeichnet, dass** sich das Kissen (20) über eine Höhe von 60 bis 80 mm, ausgehend vom unteren Rand der Kopfstütze, erstreckt.

6. Kopfstütze nach einem der vorhergehenden Ansprüche, **dadurch gekennzeichnet, dass** das Halteelement (1) um eine bezüglich der Kopfstütze quer verlaufende dritte Drehachse (X3), die im Wesentlichen in der Ebene der Kontaktfläche angeordnet ist, drehbar befestigt ist.

7. Kopfstütze nach einem der vorhergehenden Ansprüche, **dadurch gekennzeichnet, dass** sie mindestens eine Befestigungsstange (4) umfasst, deren erstes Ende mit dem unteren Teil des zentralen Halteteils (6) verbunden ist und deren zweites Ende mit der Rückenlehne (5) eines Kraftfahrzeugsitzes zusammenwirken kann.

8. Kopfstütze nach den Ansprüchen 6 und 7, **dadurch gekennzeichnet, dass** das Halteelement (1), wenn es um die dritte Drehachse (X3) drehbar befestigt ist, zwischen einer geraden Position, die im Wesentlichen parallel zur Stange (4) ist, und einer geneigten Position, in der der untere Teil des Halteelements (1) am weitesten von der Stange (4) entfernt ist, beweglich ist.

9. Kopfstütze nach Anspruch 8, **dadurch gekennzeichnet, dass** die Stange (4) in der Kopfstütze verschiebbar befestigt ist und dass die Kopfstütze Mittel zur Befestigung und Einstellung der Länge der Stange (4) umfasst.

10. Kraftfahrzeugsitz (5), der eine Rückenlehne und ein Sitzteil umfasst, **dadurch gekennzeichnet, dass** der freie Rand der Rückenlehne, der nicht mit dem Sitzteil verbunden ist, eine Kopfstütze nach einem der Ansprüche 1 bis 9 umfasst.

11. Kraftfahrzeugsitz nach Anspruch 10, **dadurch gekennzeichnet, dass** der Abstand der Kopfstütze zum freien Rand der Rückenlehne einstellbar ist, dass die Rückenlehne eine vordere Fläche, die zum Inkontaktkommen mit dem Rücken eines Benutzers ausgelegt ist, umfasst, und dass das Halteelement (1) um eine im Wesentlichen quer zur Kopfstütze verlaufende Drehachse (X3) schwenkbar befestigt und so angeordnet ist, dass die Kopfstütze in eine Position gebracht werden kann, in der das Halteelement (1) einen Teil der vorderen Fläche der Rückenlehne bedeckt.
